(19) Europäisches Patentamt
European Patent Office
Office européen des brevets

(11) Veröffentlichungsnummer : **0 123 707**
**B1**

(12) # EUROPÄISCHE PATENTSCHRIFT

(45) Veröffentlichungstag der Patentschrift : **21.10.87**

(51) Int. Cl.⁴ : **G 11 B 5/72**, G 11 B 5/187

(21) Anmeldenummer : **83104289.0**

(22) Anmeldetag : **02.05.83**

(54) **Anordnung aus einer mit einem Schmierstoff versehenen Magnetplatte und einem Magnetkopf und Verfahren zum Herstellen der Anordnung.**

(43) Veröffentlichungstag der Anmeldung :
**07.11.84 Patentblatt 84/45**

(45) Bekanntmachung des Hinweises auf die Patenterteilung : **21.10.87 Patentblatt 87/43**

(84) Benannte Vertragsstaaten :
**DE FR GB IT SE**

(56) Entgegenhaltungen :
**EP-A- 0 008 777**
**DE-A- 2 756 254**
**DE-A- 2 923 682**
**PATENTS ABSTRACTS OF JAPAN, Band 6, Nr. 121 (P-126)[999], 6th July 1982**
**IBM TECHNICAL DISCLOSURE BULLETIN, Band 10, Nr. 4, September 1967, Seite 364, New York, US, K.R. GREBE: "Batch fabricated tape heads"**
**Die Akte enthält technische Angaben, die nach dem Eingang der Anmeldung eingereicht wurden und die nicht in dieser Patentschrift enthalten sind.**

(73) Patentinhaber : **IBM DEUTSCHLAND GMBH**
**Pascalstrasse 100**
**D-7000 Stuttgart 80 (DE)**
**DE**
**International Business Machines Corporation**
**Old Orchard Road**
**Armonk, N.Y. 10504 (US)**
**FR GB IT SE**

(72) Erfinder : **Glatzel, Michael, Dipl.-Phys.**
**Im Kleegarten 1**
**D-6501 Hahnheim (DE)**
Erfinder : **Hinkel, Holger, Dr., Dipl.-Phys.**
**Zeisigweg 13**
**D-7030 Böblingen (DE)**
Erfinder : **Kaus, Gerhard, Dr. Dipl.-Min.**
**Talstrasse 56**
**D-7031 Mötzingen (DE)**
Erfinder : **Kraus, Georg**
**Im Heinental 70**
**D-7277 Wildberg 4 (DE)**
Erfinder : **Kuenzel, Ulrich, Dr., Dipl.-Chem.**
**August Lämmle Strasse 8**
**D-7408 Kusterdingen (DE)**
Erfinder : **Max, Erhard, Dr., Dipl.-Phys.**
**Eichendorffstrasse 11**
**D-7263 Bad Liebenzell (DE)**
Erfinder : **Moennich, Annelie**
**Adenauerring**
**D-6551 Gau Bickelheim (DE)**

(74) Vertreter : **Oechssler, Dietrich, Dr. rer. nat.**
**IBM Deutschland GmbH Patentwesen und Urheberrecht Schönaicher Strasse 220**
**D-7030 Böblingen (DE)**



Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft eine Anordnung, welche aus einer Magnetplatte und einem Magnetkopf besteht, wobei die dem Magnetkopf zugwandte Seite der Magnetplatte aus einer aus einem polymeren Bindemittel, in welcher magnetische Teilchen dispergiert sind, bestehenden magnetisierbaren Schicht gebildet wird, auf die ein Schmierstoffilm aufgebracht ist und wobei das Substrat des Magnetkopfs eine adsorptive Wirkung auf den Schmierstoff ausübt, und ein Verfahren zur Herstellung der Anordnung, bei dem die dem Magnetkopf zugewandte Seite der Magnetplatte aus einem polymeren Bindemittel, in welchem magnetische Teilchen dispergiert worden sind, erzeugt wird, bei dem das Substrat des Magnetkopfes (2) mindestens teilweise aus einem keramischen Material gebildet wird und bei dem auf die magnetisierbare Schicht (1) der Magnetplatte ein Schmierstoffilm aufgebracht wird.

Es ist beispielsweise aus der DE-B-28 39 378 eine Magnetplatte mit einer darauf mindestens einseitig aufgebrachten magnetisierbaren Schicht, die in einem polymeren Bindemittel und üblichen Zusatzstoffen fein verteilt die magnetischen Teilchen enthält, bekannt, bei welcher auf der Oberfläche der magnetisierbaren Schicht ein dünner Schmierstoffilm aufgebracht ist, welcher im Betrieb, bei welchen die magnetisierbare Schicht bei hohen Umdrehungszahlen mit einem Magnetkopf in Wechselwirkung tritt, den Verschleiß von Magnetplatte und Magnetkopf vermindern soll. Aus der genannten DE-B ist auch bekannt, als Schmierstoff Perfluorätherolgemische zu verwenden. Es wurde jedoch festgestellt, daß die Schmierung nicht voll den gewünschten Effekt hat und darüber hinaus auch noch zusätzliche Probleme schafft. So hat es sich gezeigt, daß der Schmierstoff, offenbar in Folge einer Inhomogenität der Oberflächenspannung die magnetisierbare Schicht nicht vollständig benetzt und dafür an anderen Stellen mikroskopisch kleine Tröpfchen bildet. Darüber hinaus wurde gefunden, daß der Magnetkopf Schmierstoff von der Platte aufnimmt und zwar insbesondere dort, wo sich Tröpfchen des Schmierstoffs auf der magnetisierbaren Schicht gebildet haben, jedoch auch an solchen Stellen, wo die Bedeckung mit Schmierstoff gleichmäßig ist, und es hat sich gezeigt, daß an den letztgenannten Stellen der abgetragene Schmierstoff nur unvollständig durch Nachfließen von noch benetzten Bereichen ersetzt wird. Das Aufnehmen des Schmierstoffs ist darauf zurückzuführen, daß der Schmierstoff auch an dem Material, welches das Substrat des Magnetkopfs bildet, haftet. Diese Haftung hat zur Folge, daß der vom Magnetkopf zunächst in Form eines Tröpfchens an seiner Hinterseite aufgenommene Schmierstoff, dann wenn sich der Magnetkopf einige Zeit relativ zur magnetisierbaren Schicht nicht bewegt, unter der Wirkung von Kapillarkräften entlang der Unterseite des Magnetkopfs in den Zwischenraum zwischen Magnetkopf und magnetisierbarer Schicht gezogen wird und dadurch der Magnetkopf und die magnetisierbare Schicht miteinander verkleben, was, wenn die Bewegungslosigkeit des Magnetkopfs hinreichend lang dauert und dadurch die Klebewirkung entsprechend stark ist, bei Wiederanlauf des Aufzeichnungsträgers zu einem Abreißen des Magnetkopfs von seiner Halterung führen kann.

Es ist die Aufgabe der Erfindung eine Anordnung, welche aus einer geschmierten magnetisierbaren Schicht und einem Magnetkopf besteht und bei welcher weitgehend ausgeschlossen ist, daß der Schmierstoff vom Magnetkopf aufgenommen wird, und ein Verfahren zum Herstellen einer solchen Anordnung anzugeben.

Diese Aufgabe wird mit einer Anordnung der eingangs genannten Art mit den Merkmalen des kennzeichnenden Teils des Patentanspruchs 1 und mit einem Verfahren der eingangs genannten Art mit den Merkmalen des kennzeichnenden Teils des Patentanspruchs 8 gelöst.

Die haftvermittelnde Schicht und die Imprägnierung vermögen jede für sich die gestellte Aufgabe zu lösen. Um jedoch die gewünschte Wirkung auch bei einer langdauernden Benutzung und unter Streßbedingungen mit Sicherheit zu erzielen und um bei der Auswahl der Materialien für die haftvermittelnde Schicht und die Imprägnierung und des Schmierstoffs möglichst flexibel sein zu können, ist es vorteilhaft, die haftvermittelnde Schicht und die Imprägnierung in der Anordnung zu kombinieren.

Die auf der magnetisierbaren Schicht aufgebrachte Schicht, im folgenden haftvermittelnde Schicht genannt, ist über chemische Bindungen und deshalb sehr fest mit der magnetisierbaren Schicht verbunden. Die Adhäsionskräfte zwischen der haftvermittlenden Schicht und dem Schmierstoff sind beachtlich größer als die Kohäsionskräfte zwischen den Molekülen des Schmierstoffs. Dadurch wird eine vollständige Benetzung (Spreitung) der magnetisierbaren Schicht erreicht. Da jedoch die Bindung der Schmierstoffschicht an die haftvermittelnde Schicht über van der Waals'sche Bindungen erfolgt, benetzt der Schmierstoff die haftvermittelnde Schicht nicht nur, sondern es besteht zwischen den beiden Schichten auch eine sehr gute Haftung. Die haftvermittelnde Schicht kann außerdem eine durch den Autophobie-Effekt hervorgerufene reduzierte Benetzbarkeit der magnetisierbaren Schicht mit dem Schmierstoff verhindern. Dabei geht es um folgendes :

Wird auf einem Substrat, wie z. B. der magnetisierbaren Schicht, ein Beschichtungsstoff aufgebracht, so können die unmittelbar dem Substrat benachbarten Beschichtungsstoffmoleküle sich zum Substrat ausrichten. Diese Ausrichtung kann zur Folge haben, daß nur bestimmte Molekülgruppen der am Substrat haftenden Beschichtungsstoffmoleküle sich den nicht dem Substrat benachbarten und die Hauptmenge bildenden Beschichtungsstoffmolekülen entgegenstrecken. Der Autophobie-Effekt besteht nun darin, daß die Adhäsion der die Hauptmenge bildenden Beschichtungsstoffmoleküle an den

genannten Molekülgruppen geringer ist, als die Kohäsion dieser Beschichtungsstoffmoleküle untereinander. Die Folge ist, daß der Beschichtungsstoff nicht zum Ausbilden einer homogenen Schicht, sondern vielmehr zur Tröpfchenbildung neigt.

Das Aufbringen der haftvermittelnden Schicht gemäß der Erfindung bewirkt außerdem eine homogene, gut haftende Bedeckung der magnetisierbaren Schicht mit Schmierstoff und daß dann, wenn der Schmierstoff durch Interaktion mit dem Magnetkopf von einer Stelle der magnetisierbaren Schicht entfernt wird, der entfernte Schmierstoff durch Zufließen von Schmierstoff aus der Umgebung einer solchen Stelle ersetzt wird, d. h., daß der Magnetkopf nie eine von Schmierstoff nicht benetzte Stelle der magnetisierbaren Schicht vorfindet.

Das Imprägnieren (d. h. das Aufbringen der haftvermindernden Schicht) der Unterseite und der Vorder- und Rückfront des Magnetkopfs hat gerade den umgekehrten Effekt wie die haftvermittelnde Schicht auf der magnetisierbaren Schicht, nämlich eine Erniedrigung der relativ starken Adhäsion des Schmierstoffs an dem Material, aus dem das Substrat des Magnetkopfes besteht. Die Erniedrigung der Adhäsion hat zur Folge, daß die Kohäsion zwischen den Schmierstoffmolekülen stärker ist, als die Adhäsion zwischen Schmierstoffmolekülen und Substratoberfläche überwiegt und wirkt dadurch einer Benetzung des Substrats mit Schmierstoff entgegen. Der gegannte Effekt kann auch durch einen Autophobie-Effekt hervorgerufen werden, z. B. indem ein Material für die Imprägnierung, d. h. für die Bildung der haftvermindernden Schicht, verwendet wird, das in der Lage ist, eine einmolekulare Schmierstoffschicht in der Weise festzuhalten, daß deren Moleküle so ausgerichtet sind, daß die Adhäsion weiterer Schmierstoffmoleküle zu dieser monomolekularen Schicht geringer ist, als die kohäsion der weiteren Schmierstoffmoleküle untereinander. Dies hat zur Folge, daß die monomolekulare Schmierstoffschicht von weiterem Schmierstoff nur noch schlecht benetzt wird, d. h. daß dieser weitere Schmierstoff nur noch schlecht haftet. Eine Haftverminderung des Schmierstoffs am Substrat des Magnetkopfs bewirkt, daß das Substrat von der magnetisierbaren Schicht kein Schmierstoffmaterial bzw. vernachlässigbar wenig aufnimmt, und daß dadurch das Verarmen an Schmierstoff an einzelnen Stellen der magnetisierbaren Schicht vermieden wird und wichtiger noch, da der Schmierstoff vom Magnetkopf praktisch nicht mehr in größeren Tropfen aufgenommen wird und dadurch die physikalischen Voraussetzungen (Kapillareffekt) für das Kriechen von Schmierstoffmaterial zwischen der magnetisierbaren Schicht und dem Magnetkopfsubstrat fehlen, das Kleben des Magnetkopfs im Ruhezustand des Aufzeichnungsträgers an der magnetisierbaren Schicht ausgeschlossen wird (Kapillardepression).

Zwar sind Strukturen bekannt, bei denen die Haftung des Schmierstoffs auf magnetischen Aufzeichnungsträgern durch eine auf der magnetischen Schicht aufgebrachte Schicht verbessert wird. Jedoch bestehen bei zwei der bekannten Strukturen (s. DE-B-26 48 303 und DE-A-19 65 48) die magnetischen Schichten nicht aus einer Dispersion magnetischer Teilchen in einem polymeren Bindemittel sondern aus Metall, und die haftungsverbessernde Schicht wird durch Oxidation der Oberfläche der magnetischen Schicht erzeugt, und der Schmierstoff ist mit der haftverbessernden Schicht nicht mittels van der Waals'scher Bindungen, sondern chemisch über Wasserstoffbrücken oder nur durch Adsorption verbunden. Bei der einzigen bekannten derartigen Struktur, bei welcher die magnetische Schicht aus einer Dispersion von magnetischen Teilchen in einem organischen Bindemittel besteht, ist auf die magnetische Schicht eine Schicht aus einem festen Schmierstoff und eine Schicht aus einem flüssigen Schmierstoff aufgebracht, wobei der feste Schmierstoff offenbar nicht über chemische Bindungen mit der magnetischen Schicht verbunden ist.

Das erfindungsgemäße Verfahren ist sehr einfach und erlaubt aufgrund der Vielzahl der zur Verfügung stehenden und im Handel erhältlichen Sililierungsmittel einerseits eine optimal an das Material, aus der die magnetisierbare Schicht besteht, und an den angewandten Schmierstoff angepaßte haftvermittelnde Schicht und andererseits eine optimal an das Material, aus dem das Substrat des Magnetkopfes besteht, und an den angewandten Schmierstoff angepaßte, haftvermindernde Schicht zu erzeugen.

Vorteilhafte Ausgestaltungen der erfindungsgemäßen Anordnung und des erfindungsgemäßen Verfahrens ergeben sich aus den Unteransprüchen.

Die Erfindung wird anhand von durch Zeichnungen erläuterten Ausführungsbeispielen beschrieben. Es zeigen

Figur 1 in schematischer Querschnittsdarstellung den Aufbau der Anordnung gemäß einer Ausführungsform der Erfindung, und

Figur 2 eine Modelldarstellung, welche die Funktion der haftvermittelnden Schicht beim Festhalten des Schmierstoffs an der magnetisierbaren Schicht verdeutlichen soll.

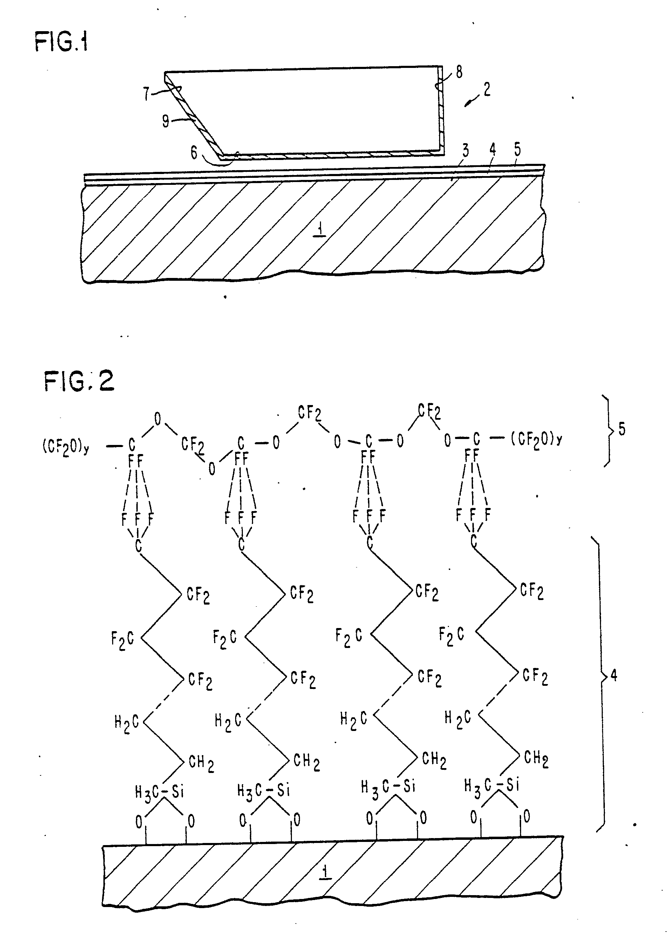

Die in der Fig. 1 gezeigte Anordnung besteht aus einer magnetisierbaren Schicht 1, einer auf der Oberfläche 3 der magnetisierbaren Schicht 1 aufgebrachten haftvermittelnden Schicht 4, einer auf der haftvermittelnden Schicht 4 aufgetragenen Schmierstoffschicht 5, dem in geringem Abstand von der magnetisierbaren Schicht gehaltenen Magnetkopf 2 und einer die Oberflächen der Vorder- und Rückfront 7, 8 und der Unterseite 6 des Magnetkopfes 2 bedeckenden, aus der haftvermindernden Schicht 9 bestehenden Imprägnierung.

Bei dem Magnetkopf 2 handelt es sich um einen Dünnfilmmagnetkopf, jedoch kann die erfindungsgemäße Anordnung statt eines Dünnfilmmagnetkopfes auch einen anderen Magnetkopftyp aufweisen.

Der Dünnfilmmagnetkopf besteht aus einem Substrat in der Form eines kleinen Keramikblocks und

dem zum Einschreiben und Lesen geeigneten Dünnfilmmagneten. Der Keramikblock hat Schlittenform, ist größenordnungsmäßig 4 mm lang, 3 mm breit und 0,75 mm hoch, und aus seiner unteren Oberfläche ist ein relativ breiter, flacher Graben parallel zur Längsachse herausgeschliffen, so daß nur noch zwei schmale Kufen stehen bleiben, welche im Bereich des einen Endes des Schlittens mit einem Winkel von ungefähr 1° ansteigen. Das Substrat ist mit den Kufen nach unten so über der Magnetplatte aufgehängt, daß sich die rotierende Magnetplatte parallel zur Längsachse des Schlittens unter diesem in Richtung vom Ende mit den ansteigenden Kufen zum anderen Ende bewegt. Auf der Rückfront des Schlittens sind zwei Dünnfilmmagnete mit nach unten, d. h. in Richtung der Kufen weisenden Magnetjochen und Leiterwindungen um jeweils eines der Joche mittels Aufdampfens aufgebracht. Die Dünnfilmmagnete sind mit Aluminiumoxid abgedeckt.

Zwar wird mit der in Fig. 1 gezeigten Anordnung, welche sowohl die Schicht 4 als auch die Schicht 9 aufweist, die beachtlichste Verbesserung gegenüber der bekannten Anordnung erzielt, jedoch sind auch Anordnungen, welche entweder nur die Schicht 4 oder nur die Schicht 9 beinhalten, brauchbar, um der Aufnahme von Schmierstoff durch den Magnetkopf entgegenzuwirken.

Die magnetisierbare Schicht 1 ist auf einem Substrat, welches üblicherweise aus einer Metallplatte auf Aluminiumbasis besteht, aufgebracht und besteht aus einer Dispersion von Eisenoxidteilchen in einem organischen Bindemittel. Das organische Bindemittel besteht beispielsweise — nicht notwendigerweise — aus einem Epoxydharz und dabei typischerweise aus einem Epoxydharz vom Bisphenol A-Epichlorhydrin-Typ. Wird als Schmierstoff ein Perfluorpolyäther verwendet, so besteht die haftvermittelnde Schicht 4 bevorzugt aus dem Reaktionsprodukt zwischen den freien OH-Gruppen an der Oberfläche 3 und einem perfluoriertem oder mindestens teilfluoriertem Sililierungsmittel. Die Formeln der typischen Vertreter der brauchbaren Sililierungsmittel sind im folgenden aufgeführt :

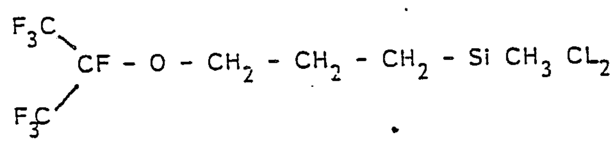

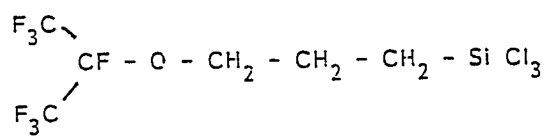

$n - C_6 F_{13} - CH_2 - CH_2 - Si\ CH_3\ Cl_2$

$n - C_6 F_{13} - CH_2 - CH_2 - Si\ CL_3$

$CF_3 - CH_2 - CH_2 - Si\ CH_3\ (OCH_3)_2$

$CHF_2 - (CF_2)_3 - Si\ Cl_3$

Wie man sieht, handelt es sich bei allen diesen Verbindungen um solche, welche am Silicium eine relativ lange, gegebenenfalls eine Äthergruppierung einschließende Kohlenstoffkette aufweisen, wobei insbesondere am freien Ende der Kette mindestens zwei Fluoratome mit dem endständigen Kohlenstoffatom verbunden sind.

Das Zusammenwirken der haftvermittelnden Schicht, welche aus einem der o. g. Materialien erzeugt worden ist, einerseits mit der aus Epoxydharz und $Fe_2O_3$ bestehenden, magnetisierbaren Schicht und andererseits der aus einem Perfluorpolyätheröl bestehenden Schmierstoffschicht wird nun anhand der Fig. 2 erläutert. in der Fig. 2 ist die magnetisierbare Schicht 1 mit der haftvermittelnden Schicht 4 über Sauerstoffbrücken verbunden. Die Verbindung zwischen der magnetisierbaren Schicht 1 und den die Schicht 4 bildenden Molekülen kommt zustande durch eine chemische Reaktion zwischen freien OH-Gruppen an der Oberfläche 3 der magnetisierbaren Schicht 1 und zwischen dem Sililisierungsmittel $n—C_6F_{13}(CH_2)_2—Si(CH_3)X_2$, wobei X eine reaktive Gruppe, wie ein Halogen oder eine $OCH_3$-Gruppe, bedeutet. Das die haftvermittelnde Schicht 4 bildende Material ist also durch eine echte chemische Bindung, und damit sehr fest mit der magnetisierbaren Schicht 1 verbunden. Man kann sich vorstellen, daß, obwohl die Anzahl der Sauerstoff-Brücken an der Oberfläche 3 der magnetisierbaren Schicht 1 relativ klein ist, die an diese Sauerstoffbrücken gebundenen Reste des Sililierungsmittels infolge dessen

relativ großen Volumens eine praktisch homogene Bedeckung der magnetisierbaren Schicht bilden. Unter anderem schützt die homogene Bedeckung mit hydrophoben Gruppen die Sauerstoffbrücken optimal vor Hydrolyse. Aus der Struktur des angewandten Sililisierungsmittels und der Position der reaktiven Gruppe im Molekül erfolgt, daß die von der magnetisierbaren Schicht 1 abgewandte Oberfläche der haftvermittelnden Schicht 4 aus $CF_3$-Gruppen besteht. Diese $CF_3$-Gruppen vermögen mit den $CF_2$-Gruppen des Schmierstoffs unter Ausbildung von van der Waals-Bindungen in Wechselwirkung zu treten. Eine solche Bindung ist stark genug, um ein Schmierstoffmolekül an der haftvermittelnden Schicht sehr stark festzuhalten. Jedoch ist diese Bindung schwächer als eine echte chemische Bindung und deshalb ist eine Verschiebung der Schmierstoffmoleküle parallel zur Oberfläche der haftvermittelnden Schicht 4 leicht möglich. Während ohne haftvermittelnde Schicht der Schmierstoff die magnetisierbare Schicht nicht vollständig benetzt (Kontaktwinkel größer 0°) und deshalb, und auch wegen der bekannten energetischen Heterogenität (d. h. im mikroskopischen Bereich liegen polare und unpolare Stellen nebeneinander vor) zu Tröpfchenbildung auf der magnetisierbaren Schicht neigt, spreitet der Schmierstoff auf der haftungsvermittelnden Schicht 4 nicht nur (Kontaktwinkel 0°), sondern hat auch zu dieser eine beachtliche chemische Affinität und man erhält deshalb und auch, da die Oberfläche der haftvermittelnden Schicht 4 energetisch homogen ist und deshalb eine homogene Oberflächenspannung aufweist, eine vollständig gleichmäßige Bedeckung der Oberfläche der haftvermittelnden Schicht 4 mit einer Schmierstoffschicht 5. Die Erzeugung der Schicht erfolgt in vorteilhafter Weise in der Weise, daß eine Lösung des Sililierungsmittels auf die magnetische Schicht beispielsweise durch Eintauchen, Aufsprühen oder Aufschleudern aufgebracht wird, daß dann die Magnetplatte in einer trockenen Umgebung, beispielsweise in einem Exsikkator, entweder bei Raumtemperatur ungefähr einen Tag lang oder bei einer Temperatur von ungefähr 100° etwa 2 Stunden lang getrocknet wird. Bei dieser Reaktion verbindet sich die reaktive Gruppe des Sililierungsmittels, welche bevorzugt aus einem Halogen oder einer Alkoholgruppe besteht, mit dem Wasserstoff der OH-Gruppen auf der Oberfläche der magnetisierbaren Schicht unter Bildung eines Halogenwasserstoffs oder eines Alkohols, und das Silicium wird über eine Sauerstoffbrücke an das Substrat gebunden, wobei bei Verwendung von monofunktionellen Silanen eine Schicht aus einer Moleküllage entsteht. Mit bi- oder trifunktionellen Silanen können mittels Hydrolyse mehrlagige Schichten aufgebaut werden.

Das Substrat des Magnetkopfs 2 besteht bevorzugt aus einem $TiC/Al_2O_3$-Sintermaterial. Der Aluminiumoxidanteil in diesem Produkt weist an seiner Oberfläche — ebenso wie die magnetisierbare Schicht — freie OH-Gruppen auf. Diese polaren Gruppen vermögen mit polaren Gruppen in Gasen oder Flüssigkeiten in Wechselwirkung zu treten und haben deshalb eine adsorbierende Wirkung für Gase und Flüssigkeiten, welche solche Gruppen aufweisen. Es sei hier angemerkt, daß es auch noch andere Materialien gibt, welche als Substrate für Dünnfilmmagnetköpfe brauchbar sind. Insbesondere dann, wenn diese Materialien vollständig oder teilweise oxidisch sind, weisen sie auch polare Gruppen an ihrer Oberfläche auf und adsorbieren deshalb Gase und Flüssigkeiten mit einer entsprechenden Konstitution. Da jedoch das $TiC/Al_2O_3$-Sindermaterial besonders günstige Eigenschaften hat und — wie gesagt — bezüglich seiner Adhäsionseigenschaften für eine größere Gruppe von Materialien als repräsentativ gelten kann, sind die folgenden Ausführungen ausschließlich auf Magnetkopfsubstrate aus $TiC/Al_2O_3$-Sintermaterial bezogen. Es sei jedoch klargestellt, daß die Ausführung sich auch auf andere Materialien übertragen lassen.

Perfluorpolyätheröle, d. h. Verbindungen mit sehr niedriger Oberflächenspannung, welche als Schmierstoffe für Magnetplatten der hier hauptsächlich besprochenen Art günstig sind, weisen stark apolare Gruppen auf, und das Substrat des Magnetkopfes 2 übt deshal eine adsorptive Wirkung auf die Schmierstoffmoleküle aus. Dies hat zur Folge, daß der Schmierstoff die Substratoberfläche mindestens teilweise benetzt, d. h. der Kontaktwinkel ist nicht sehr stark von 0° verschieden. Es treten dann — insbesondere dann, wenn der Schmierstoff auf der Magnetplattenoberfläche Tröpfchen bildet — die oben bereits angesprochenen Probleme, nämlich die Aufnahme von Schmierstoff durch den Magnetkopf und das « Kleben » des Magnetkopfs an der Magnetplatte auf, was dadurch hervorgerufen wird, daß der an der Rückfront des Magnetkopfs haftende Schmierstoff unter dem Einfluß von zwischen der Magnetkopfunterseite und der Magnetplattenoberfläche wirkenden Kapillarkräften zwischen Magnetkopf und Magnetplatte gezogen wird.

Die Verhinderung der Aufnahme von Schmierstoff durch den Magnetkopf wird erfindungsgemäß erreicht, indem eine haftvermindernde Schicht auf die Unterseite 6 und die Vorder- und die Rückfront 7 bzw. 8 des Magnetkopfes 2 aufgebracht wird. Die bevorzugte Ausführungsform dieser Schicht ist chemisch mit dem Magnetkopfsubstrat verbunden und weist an ihrer, vom Substrat abgewandten Oberfläche hauptsächlich Gruppen auf, welche mit dem Schmierstoff chemisch wenig verwandt sind. Die haftvermindernde Schicht wird bevorzugt in derselben Weise wie die haftvermittelnde Schicht hergestellt. Dabei wird ein Sililierungsmittel verwendet, welches am Silicium einerseits eine Gruppe aufweist, welche mit an der Oberfläche des Substrats befindlichen freien OH-Gruppen zu reagieren vermag, und andererseits einen organischen Rest aufweist, dessen endständige, d. h. von der Oberfläche des Substrats abgewandte Gruppe die Voraussetzung erfüllt, daß sie mit dem Schmierstoffmaterial, wie z. B. einem Perfluorpolyätheröl, chemisch nicht verwandt ist. Als Sililierungsmittel zur Herstellung der haftvermindernden Schicht sind die folgenden Verbindungen mit den allgemeinen Formeln

$R^1 R^2 R^3 Si X_1$, $R^1 R^2 Si X_2$ und $R^1 Si X_3$ geeignet, wobei

$X = -Cl, -OCH_3, -OC_2H_5, -OSO_2-CF_3$ und

$R^1, R^2, R^3 = CH_3-, C_2H_5-, -C_6H_{13}, -C_{18}H_{37}-, -C_6H_5$,

teilfluorierte Alkylgruppen, oder

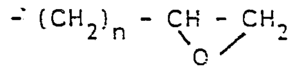

bedeuten können, geeignet. Trotz der relativ geringen Anzahl von OH-Gruppen an der Substratoberfläche bilden die an den Siliciumatomen hängenden organischen Reste wegen ihres relativ großen Volumens eine vollständige Bedeckung der Substratoberfläche. Diese vollständige Bedeckung verhindert eine Hydrolyse der Silicium-Sauerstoff-Bindungen und gewährleistet außerdem, daß die Oberflächenspannung über die Substratoberfläche im wesentlichen homogen ist. Durch das beschriebene Aufbringen der haftvermindernden Schicht wird erreicht, daß der Kontaktwinkel zwischen Substrat und Lube von einem Wert, welcher bei der unbehandelten Substratoberfläche nur wenig großer als 0° ist, auf einen Wert von bis zu 31° ansteigt, was gleichbedeutend ist mit einer sehr beachtlichen Verminderung der Adhäsion des Schmierstoffs am Magnetkopfsubstrat.

Eine verschlechterte Haftung des Schmierstoffs am Substrat des Dünnfilmmagnetkopfs kann auch dadurch erreicht werden, daß eine chemisch an die Substratoberfläche gebundene Schicht erzeugt wird, welche den Autophobie-Effekt begünstigt. Es kann also auch auf diese Weise eine beachtliche Aufnahme von Schmierstoff durch das Substrat und damit auch das Kleben des Substrats an der Magnetplatte verhindert werden.

Die Erfindung soll im folgenden anhand von speziellen Beispielen noch deutlicher erläutert werden.

Die Beispiele 1 bis 3 betreffen das Aufbringen eines als Schmierstoff dienenden Perfluorpolyätheröls auf eine magnetisierbare Schicht, welche aus einer Dispersion von Eisenoxidteilchen in einem Epoxydharz auf der Basis von Bisphenol-A-Epichlorhydrin besteht, und zwar ohne (Beispiel 1) und mit (Beispiele 2 und 3) Unterstützung einer die Haftung beeinflussenden Schicht. Die Beispiele 4 bis 7 betreffen das Verhalten eines aus einem $TiC/Al_2O_3$-Sinterprodukt bestehenden Substrat eines Dünnfilmmagnetkopfes gegenüber einem als Schmierstoff dienenden Perfluorpolyätheröl, wobei bei den Beispielen 5 bis 7, nicht jedoch beim Beispiel 4, das Substrat mit einer die Haftung beeinflussenden Schicht versehen wird.

In der folgenden Tabelle sind die bei den Beispielen angewandten Sililierungsmittel für die Herstellung der die Schmierstoffhaftung beeinflussenden Schicht und außerdem bei den Beispielen 1 bis 3 die Menge des festgehaltenen Schmierstoffs pro Platte und als Maß für die Homogenität der Belegung mit Schmierstoff der 1σ-Wert, bei den Beispielen 1 bis 3 der Kontaktwinkel zwischen der magnetisierbaren Schicht und dem Schmierstoff und bei den Beispielen 4 bis 7 der Kontaktwinkel zwischen dem Substrat bzw. dem beschichteten Substrat und dem Schmierstoff angegeben.

| Beispiel Nr. | Unterlagen | Material für die Haftung beeinflussende Schicht | Festgehaltener Schmierstoff Menge [mg] | Streuung (1σ) | Kontakt-Winkel |
|---|---|---|---|---|---|
| 1 | magnetisierbare Schicht | — | 15,9 ± 3,4 | 1,7 | ~ 2-3° |
| 2 | — | Hexamethyl-disilazan | 12,6 ± 0,5 | 0,3 | 0° |
| 3 | — | n—$C_6F_{13}$—$(CH_2)_2$—Si—Cl $CH_3$ | 22,3 ± 0,9 | 0,4 | 0° (spreitend) |
| 4 | Substrat des Dünnfilmmagnetkopfes | — | | | ~ 0° (spreitend) |
| 5 | — | Methacrylpropyltrimethylsilan | | | 6° |
| 6 | — | Glasclad | | | 24° |
| 7 | — | t-Butyldimethylchlorsilan | | | 31° |

Beispiele 1 bis 3

Bei den Beispielen 1 bis 3 wurden je 5 Magnetplatten prozessiert. Beim Beispiel 1 wurde keine die

Schmierstoffhaftung beeinflussende Schicht aufgebracht. Bei den Beispielen 2 und 3 wurden die Magnetplatten zunächst unter Rotieren in eine 10 %ige Lösung von Hexamethyldisilazan (Beispiel 2) bzw. von

$n—C_6F_{13}—(CH_2)_2—Si(CH_3)—Cl$ (Beispiel 3)

in Freon 5 Minuten lang eingetaucht. Dabei wurden die magnetisierbaren Schichten mit dem Sililierungsmittel intensiv in Kontakt gebracht. Anschließend wurde bei 100 °C in einer trockenen Atmosphäre, beispielsweise in einem Exsikkator getrocknet. Bei allen drei Beispielen wurde anschließend Schmierstoff auf die magnetisierbaren Schichten aufgetragen, anschließend wurde der Schmierstoff eingerieben und schließlich der Überschuß durch Abwischen entfernt. Das Beispiel 2 zeigt, daß eine aus Hexamethyldisilazan erzeugte Schicht auf der magnetisierbaren Schicht bewirkt, daß weniger Schmierstoff festgehalten wird, als auf der unbehandelten magnetisierbaren Schicht. Dies ist nicht überraschend, weil es sich bei dem Hexamethyldisilazan nicht um ein wenigstens teilfluoriertes Material handelt und deshalb sich keine van der Waals'schen Bindungen zwischen der aufgebrachten Schicht und dem Schmierstoff ausbilden können. Der Versuch mit dem Hexamethyldisilazan zeigt jedoch (siehe den 1 σ-Wert), daß die Homogenität der Belegung mit Schmierstoff wesentlich homogener ist als bei der nicht mit einer Schicht versehenen magnetisierbaren Schicht. Wird wie im Beispiel 3 die Schicht aus einem praktisch perfluorierten Sililisierungsmittel erzeugt, so ergibt sich — wie der Vergleich zwischen den Beispielen 1 und 3 zeigt — daß die Menge des festgehaltenen Schmierstoffs wesentlich größer und die Homogenität der Belegung mit Schmierstoff wesentlich besser ist, als bei der nicht mit einer Schicht versehenen magnetisierbaren Schicht.

Beispiele 4 bis 7

Beim Beispiel 4 wurde das Substrat des Dünnfilmmagnetkopfes nicht mit einer die Haftung beeinflussenden Schicht versehen. Beim Beispiel 5 wurde das Substrat 1 Minute lang in eine 0,1 %ige Lösung von Methacrylpropyltrimethoxysilan in einer Mischung aus 95 % Methylalkohol und 5 % Wasser, welche Raumtemperatur hatte, getaucht und anschließend bei Raumtemperatur 12 Stunden lang im Exsikkator getrocknet. Beim Beispiel 6 wurde das Substrat bei Raumtemperatur 10 Sekunden lang in eine 1 %ige wässrige Lösung von Glasclad 18 getaucht und anschließend 12 Stunden lang in einem Exsikkator bei Raumtemperatur getrocknet. Bei Glasclad 18 handelt es sich um ein Siloxan, welches von der Fa. Petrach, Systems Inc. unter diesem Handelsnamen vertrieben wird. Beim Beispiel 7 wurde das Substrat 2 Stunden lang einer unter Rückfluß siedenden (110 °C) 0,1 %igen Lösung von t-Butyldimethylchlorsilan in Toluol ausgesetzt und anschließend 12 Stunden lang in einem Exsikkator getrocknet. Auf die so behandelten Substrate und auf ein Substrat, auf welchem keine Schicht erzeugt worden war (Beispiel 4), wurde dann ein Schmierstofffilm aufgebracht und jeweils der Kontaktwinkel zwischen der Substratoberfläche und dem Schmierstofffilm gemessen. Ein Vergleich der bei den vier Beispielen gemessenen Kontaktwinkel zeigt, daß durch das Erzeugen der die Haftung beeinflussenden Schicht auf der Substratoberfläche, insbesondere durch die Erzeugung einer Schicht aus dem t-Butyldimethylchlorsilan, der Kontaktwinkel beachtlich erhöht werden konnte.

**Patentansprüche**

1. Anordnung welche aus einer Magnetplatte und einem darüber angeordneten Magnetkopf (2) besteht, wobei die dem Magnetkopf zugewandte Seite der Magnetplatte aus einer aus einem polymeren Bindemittel, in welchem magnetische Teilchen dispergiert sind, bestehenden magnetisierbaren Schicht (1) gebildet wird, auf die ein Schmierstoffilm (5) aufgebracht ist und wobei das Substrat des Magnetkopfs (2) mindestens teilweise aus einem keramischen Material besteht, dadurch gekennzeichnet, daß die Oberfläche (3) der magnetisierbaren Schicht (1) mit einer im wesentlichen monomolekularen, haftvermittelnden Schicht (4) vollständig bedeckt ist, welche aus einem Material besteht, welches chemisch an die magnetisierbare Schicht (1) gebunden ist, welche eine höhere Oberflächenspannung als die magnetisierbare Schicht (1) hat und welche van der Waals'sche Bindungen zu dem Schmierstoffilm ausbildet, und/oder die Unterseite (6) und die Vorder- und Rückfront (7 bzw. 8) des Magnetkopfes (2), welche aus Magnetkopfsubstratmaterial bestehen, mit einem Material unter Bildung einer haftvermindernden Schicht (9) imprägniert sind, welches eine Haftung beachtlicher Schmierstoffmengen am Substratmaterial verhindert.

2. Anordnung nach Anspruch 1, dadurch gekennzeichnet, daß das polymere Bindemittel ein Epoxidharz ist.

3. Anordnung nach Patentanspruch 1 oder 2, dadurch gekennzeichnet, daß der Schmierstoffilm (5) aus einem Perfluorpolyätheröl oder einem Gemisch solcher Öle besteht.

4. Anordnung nach einem der Ansprüche 1 bis 3, dadurch gekennzeichnet, daß die haftvermittelnde Schicht (4) aus einem Reaktionsprodukt zwischen einem Sililierungsmittel aus der Gruppe

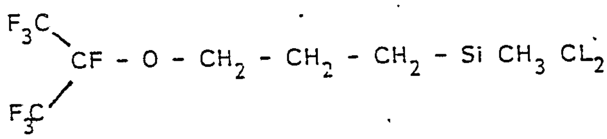

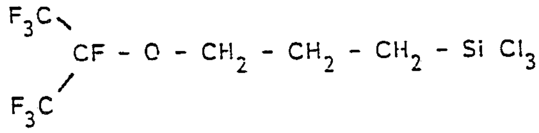

$n-C_6F_{13}-CH_2-CH_2-Si\,CH_3\,Cl_2$

$n-C_6F_{13}-CH_2-CH_2-Si\,CL_3$

$CF_3-CH_2-CH_2-Si\,CH_3\,(OCH_3)_2$

$CHF_2-(CF_2)_3-Si\,Cl_3$

und freien OH-Gruppen an der Oberfläche des polymeren Bindemittels besteht.

5. Anordnung nach einem der Ansprüche 1 bis 4, dadurch gekennzeichnet, daß die haftvermindernde Schicht (9) keine chemische Affinität zum Schmierstoff und eine geringere Oberflächenspannung als die Substratoberfläche hat.

6. Anordnung nach Anspruch 5, dadurch gekennzeichnet, daß die haftvermindernde Schicht (9) aus einem Reaktionsprodukt zwischen einem Sililierungsmittel aus einer Gruppe von Verbindungen mit den allgemeinen Formeln

$R^1\,R^2\,R^3\,Si\,X_1$, $R^1\,R^2\,Si\,X_2$ und $R^1$ si $X_3$, wobei

$X = -CL, -OCH_3, -OC_2H_5, -OSO_2-CF_3$ und

$R^1, R^2, R^3 = CH_3-, C_2H_5-, -C_6H_{13}, -C_{18}H_{37}-, -C_6H_5,$

teilfluorierte Alkylgruppen, oder

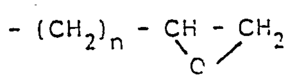

bedeuten

und den freien OH-Gruppen and der Oberfläche des bevorzugt aus einem TiC/$AL_2O_3$-Sintermaterial bestehendes Substrats des des Magnetkopfes (2) besteht.

7. Anordnung nach einem der Ansprüche 1 bis 6, dadurch gekennzeichnet, daß die magnetisierbare Schicht (1) aus einer Dispersion von Eisenoxidteilchen in einem Epoxydharz, die haftvermittelnde Schicht (4) aus dem Reaktionsprodukt zwischen

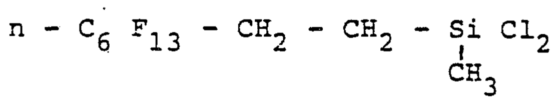

und den OH-Gruppen auf der Epoxydharzoberfläche (3), das Schmiermittel aus einem Perfluorpolyätheröl, das Substrat des Magnetkopfes (2) aus einem TiC/$Al_2O_3$-Sintermaterial und die haftvermindernde Schicht (9) aus dem Reaktionsprodukt zwischen

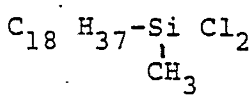

und den OH-Gruppen an der Oberfläche des TiC/$Al_2O_3$-Sintermaterials bestehen.

8. Verfahren zum Herstellen einer Anordnung nach einem der Ansprüche 1 bis 7, bei dem die einem Magnetkopf zugewandte magnetisierbare Schicht (1) einer Magnetplatte aus einem polymeren Bindemittel, in welchem magnetische Teilchen dispergiert worden sind, erzeugt wird, bei dem das Substrat des Magnetkopfes (2) mindestens teilweise aus einem keramischen Material gebildet wird und bei dem auf die magnetisierbare Schicht (1) der Magnetplatte ein Schmierstoffilm aufgebracht wird, dadurch gekennzeichnet, daß vor dem Aufbringen des Schmierstoffilms reaktive Gruppen auf der Oberfläche (3) der magnetisierbaren Schicht (1) mit einem Sililierungsmittel zur Reaktion gebracht werden, dessen Moleküle an einer Stelle eine chemische Affinität zu den reaktiven Gruppen auf der Oberfläche (3) der magnetisierbare Schicht (1) aufweisen und dessen Moleküle an dem von der die Affinität vermittelnden Stelle am weitesten entfernten Ende eine Gruppe aufweisen, die zu Gruppen der Schmierstoffmoleküle van der Waals'sche Bindungen auszubilden vermag, und/oder daß reaktive Gruppen auf der Oberfläche des Substrats des Magnetkopfes (2) mit einem Sililierungsmittel zur Reaktion gebracht werden, dessen Moleküle an einer Stelle eine chemische Affinität zu den reaktiven Gruppen auf der Oberfläche des Substrats aufweisen und dessen Moleküle an dem von der die Affinität vermittelnden Stelle am weitesten entfernten Ende eine Gruppe aufweisen, die sich gegenüber den Schmierstoffmolekülen chemisch indifferent bzw. abstoßend verhält.

9. Verfahren nach Anspruch 8, dadurch gekennzeichnet, daß die genannten Sililierungsmittel durch Tauchen, Aufschleudern oder Sprühen auf die Oberfläche der magnetisierbaren Schicht (1) bzw. des Substrats des Magnetkopfes (2) aufgebracht wird, daß anschließend entweder bei Raumtemperatur ungefähr einen Tag oder bei ungefähr 100 °C ungefähr 2 Stunden lang in einer feuchtigkeitsfreien Atmosphäre getrock net wird.

10. Verfahren nach Anspruch 9, dadurch gekennzeichnet, daß Lösungen der genannten Sililierungsmittel aufgebracht werden.

11. Verfahren nach Anspruch 8 oder 9, dadurch gekennzeichnet, daß nach dem Erzeugen der haftvermittelnden Schicht (4) Schmierstoff auf die haftvermittelnde Schicht (4) aufgetragen, und dann eingerieben wird und schließlich der Schmierstoffüberschuß abgewischt wird.

12. Verfahren nach Anspruch 8 oder 9, dadurch gekennzeichnet, daß als Sililierungsmittel Glasclad, ein unter diesem Handelsnamen von der Firma Petrach, Systems Inc. vertriebenes Siloxan, auf die Oberfläche des Substrats des Magnetkopfs (2) aufgebracht wird.

**Claims**

1. Arrangement consisting of a magnetic disc and a magnetic head (2) above it, the side of the magnetic disc facing the magnetic head being formed of a magnetizable layer (1) consisting of a polymeric binder with magnetic particles dispersed therein, and carrying a lubricant film (5), and the substrate of the magnetic head (2) consisting at least partly of a ceramic material, characterized in that the surface (3) of the magnetizable layer (1) is completely covered with a substantially monomolecular, adhesion promoting layer (4) which consists of a material that is chemically bonded to the magnetizable layer (1) which has a higher surface tension than the magnetizable layer (1), and which produces van der Waals bonds to the lubricant film, and/or the lower surface (6) and the front and back surface (7 and 8, respectively) of the magnetic head (2) which consist of magnetic head substrate material, are impregnated with a material with an adhesion reducing layer (9) being formed in the process, so that the adhering of considerable amounts of lubricant to the substrate material is prevented.

2. Arrangement as claimed in claim 1, characterized in that the polymeric binder is an epoxide resin.

3. Arrangement as claimed in patent claim 1 or 2, characterized in that the lubricant film (5) consists of a perfluoropolyether oil, or of a mixture of such oils.

4. Arrangement as claimed in any one of claims 1 to 3, characterized in that the adhesion promoting layer (4) consists of a reaction product between a silitating agent selected from the group containing

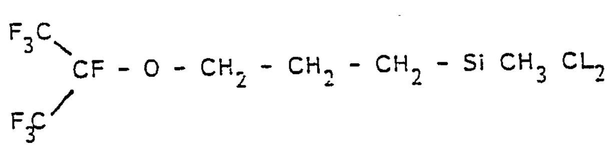

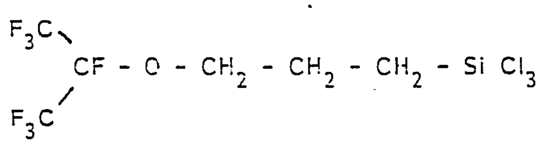

$n - C_6 F_{13} - CH_2 - CH_2 - Si\ CH_3\ Cl_2$

$$n-C_6F_{13}-CH_2-CH_2-Si\,CL_3$$

$$CF_3-CH_2-CH_2-Si\,CH_3\,(OCH_3)_2$$

$$CHF_2-(CF_2)_3-Si\,Cl_3$$

and free OH groups on the surface of the polymeric binder.

5. Arrangement as claimed in any one of claims 1 to 4, characterized in that the adhesion reducing layer (9) does not have any chemical affinity to the lubricant, and a lower surface tension than the magnetic head substrate surface.

6. Arrangement as claimed in claim 5, characterized in that the adhesion reducing layer (9) consists of a reaction product between a silitating agent out of a group of compounds having the general formulas

$R^1\,R^2\,R^3\,Si\,X_1$, $R^1\,R^2\,Si\,X_2$ and $R^1\,Si\,X_3$, with

X representing $-Cl$, $-OCH_3$, $-OC_2H_5$, or $-OSO_2-CF_3$ and

$R^1$, $R^2$, $R^3$ $CH_3-$, $C_2H_5-$, $-C_6H_{13}$, $-C_{18}H_{37}-$, $-C_6H_5$,

partly fluorinated alcyl groups, or

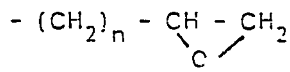

and with the free OH groups on the surface of the substrate of the magnetic head (2), which substrate preferably consists of a $TiC/Al_2O_3$ sinter material.

7. Arrangement as claimed in any one of claims 1 to 6, characterized in that the magnetizable layer (1) consists of a dispersion of iron oxide particles in an epoxide resin, the adhesion promoting layer (4) of the reaction product between

$$n-C_6F_{13}-CH_2-CH_2-Si\,Cl_2$$
$$CH_3$$

and the OH groups on the epoxide resin surface (3), the lubricant of the perfluoropolyetheroil, the substrate of the magnetic head (2) of a $TiC/Al_2O_3$ sinter material, and the adhesion reducing layer (9) of the reaction product between

$$C_{18}H_{37}-Si\,Cl_2$$
$$CH_3$$

and the OH groups on the surface of the $TiC/Al_2O_3$ sinter material.

8. Method of making an arrangement as claimed in any one of claims 1 to 7, where the magnetizable layer (1) of a magnetic disc facing a magnetic head is produced of a polymeric binder in which magnetic particles have been dispersed, where the substrate of the magnetic head (2) is formed at least partly of a ceramic material, and where onto the magnetizable layer (1) of the magnetic disc a lubricant is applied, characterized in that prior to the application of the lubricant the active groups on the surface (3) of the magnetizable layer (1) are made to react with a silitating agent whose molecules show in one place a chemical affinity to the reactive groups on the surface (3) of the magnetizable layer (1), and whose molecules, at the end being at the greatest distance from the place supplying the affinity, comprise a group which to groups of the lubricant molecules are able to form van der Waals bonds, and/or that reactive groups on the surface of the substrate of the magnetic head (2) are made to react with a sililating agent whose molecules show in one place a chemical affinity to the reactive groups on the surface of the substrate, and whose molecules, at the end being at the greatest distance from the place supplying the affinity, comprise a group which relative to the lubricant molecules behaves chemically indifferently, or repulsively.

9. Method as claimed in claim 8, characterized in that the above sililating agents are applied by immersion, spin-coating or sputtering to the surface of the magnetizable layer (1), or of the substrate of the magnetic head (2), respectively, that subsequently either at room temperature for approximately 1 day, or at approximately 100 °C for approximately 2 hours there follows a drying process in a moisture-free atmosphere.

10. Method as claimed in claim 9, characterized in that solutions of the above mentioned silitating agents are applied.

11. Method as claimed in claim 8 or 9, characterized in that after the production of the adhesion promoting layer (4) lubricant is applied to the adhesion promoting layer (4) and subsequently rubbed in, and finally the lubricant surplus is wiped off.

12. Method as claimed in claim 8 or 9, characterized in that as a sililating agent Glasclad, a siloxane marketed under that trade name by Petrach Systems Inc., is applied to the surface of the substrate of the magnetic head (2).

**Revendications**

1. Dispositif, qui est constitué par un disque magnétique et par une tête magnétique (2) disposée audessus de ce disque et dans lequel la face du disque magnétique, tournée vers la tête magnétique est formée par une couche magnétisable (1) constituée par un liant polymère, dans lequel des particules magnétiques sont dispersées, et sur laquelle se trouve disposée une pellicule de lubrifiant (5), et dans lequel le substrat de la tête magnétique (2) est constitué au moins partiellement par un matériau céramique, caractérisé en ce que la surface (3) de la couche magnétique (1) est entièrement recouverte par une couche adhésive (4), essentiellement monomoléculaire, qui est constituée en un matériau qui est lié chimiquement à la couche magnétisable (1), possède une tension superficielle supérieure à celle de la couche magnétisable (1) et forme des liaisons de van der Waals avec la pellicule de lubrifiant, et/ou la face inférieure (6) et la face avant et la face arrière (7 ou 8) de la tête magnétique (2), qui sont constituées en un matériau formant le substrat de la tête magnétique, sont imprégnées par une substance qui empêche l'adhérence de quantités importantes de lubrifiant sur le matériau du substrat, moyennant la formation d'une couche (9) réduisant l'adhérence.

2. Dispositif selon la revendication 1, caractérisé en ce que le liant polymère est une résine époxy.

3. Dispositif selon la revendication 1 ou 2, caractérisé en ce que la pellicule de lubrifiant (5) est constituée par des huiles de polyéthers perfluoriques ou un mélange de telles huiles.

4. Dispositif selon l'une des revendications 1 à 3, caractérisé en ce que la couche adhésive (4) est constituée par un produit de la réaction entre un agent de traitement au silicone tiré du groupe

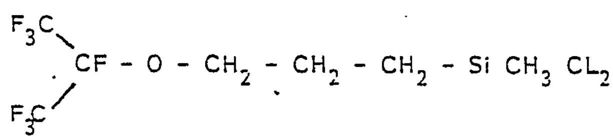

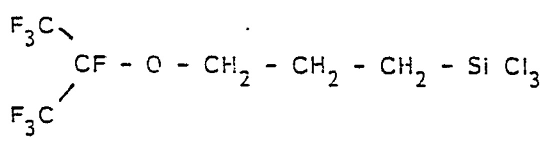

$$n - C_6 F_{13} - CH_2 - CH_2 - Si\ CH_2\ Cl_2$$

$$n - C_6 F_{13} - CH_2 - CH_2 - Si\ CL_3$$

$$CF_3 - CH_2 - CH_2 - Si\ CH_3\ (OCH_3)_2$$

$$CHF_2 - (CF_2)_3 - Si\ Cl_3$$

et des groupements OH libres à la surface du liant polymère.

5. Dispositif selon l'une des revendications 1 à 4, caractérisé en ce que la couche (9) réduisant l'adhérence n'a aucune affinité chimique avec le lubrifiant et possède une tension superficielle inférieure à celle de la surface du substrat.

6. Dispositif selon la revendication 5, caractérisé en ce que la couche (9) réduisant l'adhérence est constituée par un produit de la réaction entre un agent de traitement au silicone tiré d'un groupe de composés répondant aux formules générales

$R^1\ R^2\ R^3\ Si\ X_1$, $R^1\ R^2\ Si\ X_2$ et $R^1\ Si\ X_3$, avec

$X = —CL, —OCH_3, —OC_2H_5, —OSO_2—CF_3$ et

$R^1, R^2, R^3 = CH^3—, C_2H_5—, —C_6H_{13}, —C_{18}H_{37}—, —C_6H_5,$

des groupes alkyle partiellement fluorés, ou

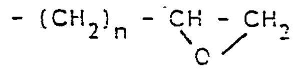

et les groupes OH libres à la surface du substrat de la tête magnétique (2), constitué de façon préférée par un matériau de frittage $TiC/Al_2O_3$.

7. Dispositif selon l'une des revendications 1 à 6, caractérisé en ce que la couche magnétisable (1) est constituée par une dispersion de particules d'oxyde de fer dans une résine époxy, que la couche adhésive (4) est constituée par le produit de la réaction entre

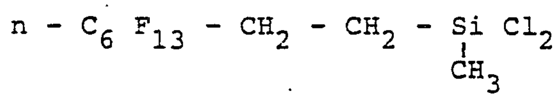

et les groupes OH à la surface (3) de la résine époxy, que le lubrifiant est constitué par une huile de polyéther perfluorique, que le substrat de la tête magnétique (2) est constitué par un matériau de frittage en $TiC/Al_2O_3$ et que la couche (9) réduisant l'adhérence est constituée par le produit de la réaction entre

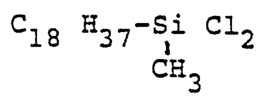

et les groupes OH situés à la surface du matériau de frittage en $TiC/Al_2O_3$.

8. Procédé pour fabriquer un dispositif selon l'une des revendications 1 à 7, selon lequel on réalise la couche magnétisable (1), tournée vers la tête magnétique, d'un disque magnétique au moyen d'un liant polymère, dans lequel des particules magnétiques auront été dispersées, on forme le substrat de la tête magnétique (2) au moins partiellement en un matériau céramique et on dépose une pellicule de lubrifiant sur la couche magnétisable (1) du disque magnétique, caractérisé en ce qu'avant le dépôt de la couche de lubrifiant, on fait réagir des groupes réactifs situés à la surface (3) de la couche magnétisable (1) avec un agent de traitement au silicone, dont les molécules présentent en un emplacement, une affinité chimique avec les groupes réactifs situés sur la surface (3) de la couche magnétisable (1), et possèdent, au niveau de l'extrémité la plus éloignée de l'emplacement développant l'affinité, un groupe qui peut former, avec des groupes des molécules de lubrifiant, des liaisons de van der Waals, et/ou on fait réagir des groupes réactifs situés à la surface du substrat de la tête magnétique (2) avec un agent de traitement au silicone, dont les molécules possèdent, en un emplacement, une affinité chimique avec les groupes réactifs situés à la surface du substrat, et possèdent, au niveau de l'extrémité la plus éloignée de l'emplacement produisant l'affinité, un groupe qui possède un comportement chimique indifférent ou de répulsion vis-à-vis des molécules du lubrifiant.

9. Procédé selon la revendication 8, caractérisé en ce que ledit agent de traitement au silicone est déposé par immersion, projection ou pulvérisation sur la surface de la couche magnétisable (1) ou du substrat de la tête magnétique (2), et qu'ensuite on le fait sécher soit à la température ambiante approximativement pendant un jour, soit à environ 100 °C pendant environ 2 heures dans une atmosphère dénuée d'humidité.

10. Procédé selon la revendication 9, caractérisé en ce que l'on utilise des solutions dudit agent de traitement au silicone.

11. Procédé selon la revendication 8 ou 9, caractérisé en ce que, après la fabrication de la couche adhésive (4), on dépose un lubrifiant sur cette couche adhésive (4), puis on l'étale et enfin on élimine par essuyage l'excès de lubrifiant.

12. Procédé selon la revendication 8 ou 9, caractérisé en ce que l'on dépose, en tant qu'agent de traitement au silicone, du Glasclad, c'est-à-dire un siloxane vendu sous ce nom commercial par la société Petrach, Systems Inc., sur la surface du substrat de la tête magnétique (2).

FIG.1

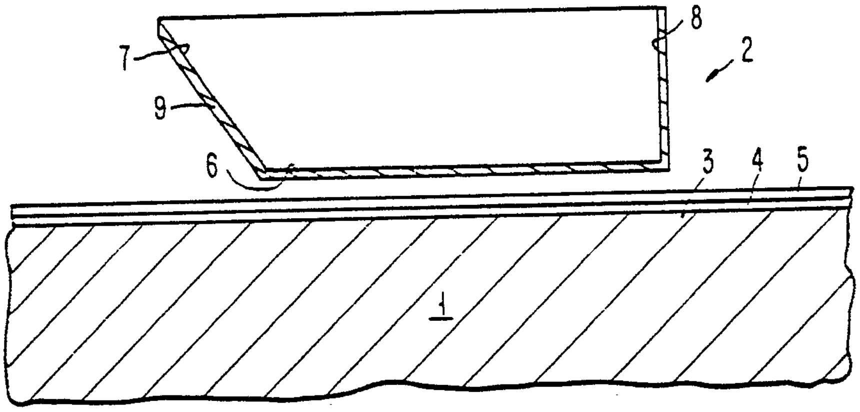


FIG. 2